# EUROPEAN PATENT SPECIFICATION

(11) **EP 3 726 625 B1**
(45) Date of publication and mention of the grant of the patent: **08.04.2026**
(21) Application number: 18888794.7
(22) Date of filing: 13.12.2018
(51) Int. Cl.: H01M 10/42, H01M 50/509, H01M 50/51, H01M 50/574

(54) **BATTERY SYSTEM AND ELECTRIC AUTOMOBILE**
BATTERIESYSTEM UND ELEKTROAUTOMOBIL
SYSTEME DE BATTERIE ET AUTOMOBILE ÉLECTRIQUE

(30) Priority: 13.12.2017 CN 201711330171
(43) Date of publication of application: 21.10.2020
(73) Proprietor: BYD Company Limited, Shenzhen, Guangdong 518118 (CN)
(72) Inventor: HE, Long, Shenzhen, Guangdong 518118 (CN); SHEN, Xi, Shenzhen, Guangdong 518118 (CN); JIANG, Luxia, Shenzhen, Guangdong 518118 (CN); JIANG, Wenfeng, Shenzhen, Guangdong 518118 (CN)
(74) Representative: Dehns Germany Partnerschaft mbB
(86) International application number: PCT/CN2018/120767
(87) International publication number: WO 2019/114776

(56) References cited:
- WO-A1-2017/033985
- CN-A- 105 470 418
- CN-A- 107 123 768
- CN-A- 107 123 775
- CN-A- 107 123 777
- CN-U- 207 818 747
- CN-U- 207 818 748
- CN-U- 207 938 710
- JP-A- 2014 229 416
- US-A1- 2014 127 549

## Description

### FIELD

The present invention relates to the field of batteries, and relates to a battery system and an electric vehicle.

### BACKGROUND

In recent years, in the context of global environmental pollution and the shortage of petroleum energy, an electric vehicle has emerged. As a main power source battery for the electric vehicle, a pouch battery has been widely applied to the electric vehicle due to advantages such as a small size, a light weight, high energy density, and high safety.

However, in a charging process, the pouch battery is prone to abnormal phenomena such as overcharging, thereby resulting in a problem such as explosion of the pouch battery.

US 2014/127549 A1 discloses discloses several pouch-shaped cells that are arranged in series and mechanically connected with a circuit breaker. An electrical fuse is electrically connected with the cells. The circuit breaker is electrically connected with the fuse via a connection circuit in order to break the fuse when electric conduction is performed due to swelling of the battery cells. In a state in which the battery modules are normal, the circuit breaker is cut off. In a state in which the battery modules are abnormal, the battery cells swell with the result that expansion force of the battery cells is transmitted to the outermost battery module. The expansion force is transmitted to the circuit breaker to perform electric conduction between the cathode conduction part and the anode conduction part of the circuit breaker. As a result, the fuse is broken and, therefore, no current flows in the electrical connection circuit of the battery pack.

### SUMMARY

The present invention provides a battery system and an electric vehicle, to resolve a technical problem of overcharging of a pouch battery.

In order to achieve the above object, the present invention provides a battery system, including at least one series circuit, a pouch battery and at least one first cell connected to the pouch battery in series being disposed in the series circuit, and a current interrupt device being disposed on the first cell; and the current interrupt device of the first cell being configured to interrupt an internal current of the first cell when at least one of the pouch battery and the first cell is abnormal, by, when one or more cells in the series circuit are abnormal, the one or more cells are at least one of the pouch battery and the first cell, a heating temperature of the first cell increases so that the current interrupt device (30) disposed on the first cell (20) is started to cut off the electrical connection between an outer electrode terminal (23) and an inner electrode terminal (24).

In some embodiments, the series circuit includes a plurality of first cells connected to the pouch battery in series, the plurality of first cells being sequentially connected in series or being alternately connected in series.

In some embodiments, the series circuit includes a plurality of first cells connected to the pouch battery in series, the plurality of first cells being connected in parallel to form a battery pack to be connected to the pouch battery in series.

In some embodiments, the first cell includes a housing, a core accommodated in the housing, a cover plate encapsulating the housing, an inner electrode terminal located at an inner side of the cover plate, and an outer electrode terminal located at an outer side of the cover plate, the inner electrode terminal being electrically connected to the core, and the current interrupt device being disposed on the cover plate and electrically connected to the outer electrode terminal and the inner electrode terminal respectively.

In some embodiments, the housing is one of an aluminum housing, a steel housing, and a plastic housing, and a thickness of the housing is 0.4 mm to 1.5 mm.

In some embodiments, the current interrupt device includes a score member and a flipping member, the score member being electrically connected to the inner electrode terminal, and the flipping member being electrically connected to the score member and the outer electrode terminal respectively and being in gas communication with an inside of the first cell.

In some embodiments, the score member includes a score region in which a score is formed, a first welding region to be electrically connected to the flipping member, and a second welding region to be electrically connected to the inner electrode terminal, and the flipping member can act under an effect of air pressure to break the score, the score being disposed around the first welding region, and at least one of the first welding region and the second welding region being disposed in a plane different from a plane in which the score is disposed.

In some embodiments, the score is disposed in a plane different from planes in which the first welding region and the second welding region are disposed.

In some embodiments, a boss protruding from the score region is formed on the score member, the first welding region being formed on an upper surface of the boss and parallel to the score region, and an annular welding joint being disposed at an outer periphery of the upper surface.

In some embodiments, a ring wall protruding in a direction same as a direction in which the boss protrudes is formed at an outer periphery of the score region, an upper edge of the ring wall being flush with an upper edge of the boss in a height direction, and an outer wall of the ring wall being to be electrically connected to the inner electrode terminal.

In some embodiments, the second welding region, the score region, and the first welding region are sequentially arranged from outside to inside in a radial direction, and form a step structure gradually approaching the flipping member from outside to inside, and the score is disposed around the first welding region.

In some embodiments, a ring wall protruding in a direction opposite to a direction in which the boss protrudes is formed at the outer periphery of the score region, the second welding region being formed at an outer periphery of the ring wall and parallel to the score region, and an annular welding joint being formed at an outer periphery of the second welding region.

In some embodiments, a sidewall of the boss and the ring wall are perpendicular to the score region respectively.

In some embodiments, the first welding region, the score region, and the second welding region respectively form a ring structure.

In some embodiments, a first connection region to be electrically connected to the score member and a second connection region to be electrically connected to the outer electrode terminal are formed on the flipping member, and a deformation cushion region is further formed on the flipping member, the deformation cushion region being disposed in the first connection region.

In some embodiments, the flipping member is a sheet structure in the shape of a cone, a small end of the cone forming the first connection region, and a large end of the cone away from the score member forming the second connection region.

In some embodiments, the deformation cushion region forms an annular groove structure surrounding the first connection region.

In some embodiments, a radial cross-section of the annular groove structure is arc-shaped or angular.

In some embodiments, a support ring is connected between a lower side of an outer periphery of the flipping member and the cover plate in a sealing manner, and an outer periphery of the outer electrode terminal is electrically connected to an upper side of the outer periphery of the flipping member.

In some embodiments, a support flange is formed on an inner wall of the support ring, the outer peripheries of the flipping member and the outer electrode terminal being supported on an upper surface of the support flange.

The present invention further provides an electric vehicle, including the battery system provided in the present invention.

According to the foregoing technical solutions, the at least one first cell connected to the pouch battery in series is disposed in the series circuit and the current interrupt device is disposed on the first cell, so that explosion of the pouch battery due to an abnormality in a charging process can be avoided, and safety of the pouch battery can be improved during working.

Other features and advantages of the present invention will be described in detail in the following specific implementations.

### BRIEF DESCRIPTION OF THE DRAWINGS

The accompanying drawings are used to provide a further understanding of the present invention, and constitute a part of the specification, which are used to explain the present invention in combination with the following specific implementations, and do not constitute a limitation to the present invention. In the accompanying drawings:
FIG. 1 is a schematic structural diagram of a battery system according to an implementation of the present invention, where a current interrupt device on a first cell is not started, and a series circuit is in a normal working state.
FIG. 2 is a schematic structural diagram of a battery system according to an implementation of the present invention, where a current interrupt device on a first cell is started normally, and a series circuit is in an open state.
FIG. 3 is a schematic structural diagram of a battery system according to another implementation of the present invention, where a current interrupt device on a first cell is not started, and a series circuit is in a normal working state.
FIG. 4 is a schematic structural diagram of a battery system according to another implementation of the present invention, where a current interrupt device on a first cell is started normally, and a series circuit is in an open state.
FIG. 5 is a schematic structural diagram of a battery system according to another implementation of the present invention, where a current interrupt device on one of first cells in a battery pack is started by mistake, and a series circuit is still in a normal working state.
FIG. 6 is a partial three-dimensional schematic exploded view of a battery system according to an implementation of the present invention.
FIG. 7 is a partial three-dimensional schematic exploded view of a battery system according to an implementation of the present invention.
FIG. 8 is a partial three-dimensional schematic exploded view of a battery system according to another implementation of the present invention.
FIG. 9 is a partial three-dimensional schematic exploded view of a battery system according to another implementation of the present invention.
FIG. 10 is a cross-sectional view of a current interrupt device according to a first implementation of the present invention.
FIG. 11 is a cross-sectional view of a current interrupt device according to a second implementation of the present invention.
FIG. 12 is a three-dimensional schematic diagram of a score member according to the second implementation of the present invention.
FIG. 13 is a three-dimensional schematic diagram of a flipping member according to the first implementation of the present invention.

### DETAILED DESCRIPTION

The following describes the specific implementations of the present invention in detail with reference to the accompanying drawings. It should be understood that the specific implementations described herein are merely used to describe and explain the present invention, but are not intended to limit the present invention.

In the present disclosure, without the contrary explanation, the directional terms such as "upper, lower, left, and right" are usually defined based on the drawing direction of the corresponding accompanying drawings, and "inside and outside" refers to the inside and outside of the contour of the corresponding component.

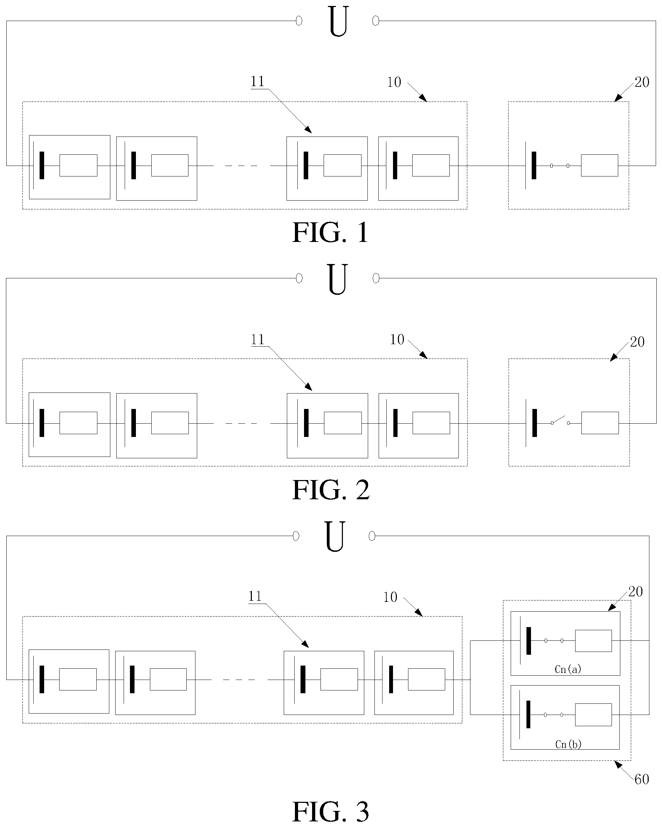

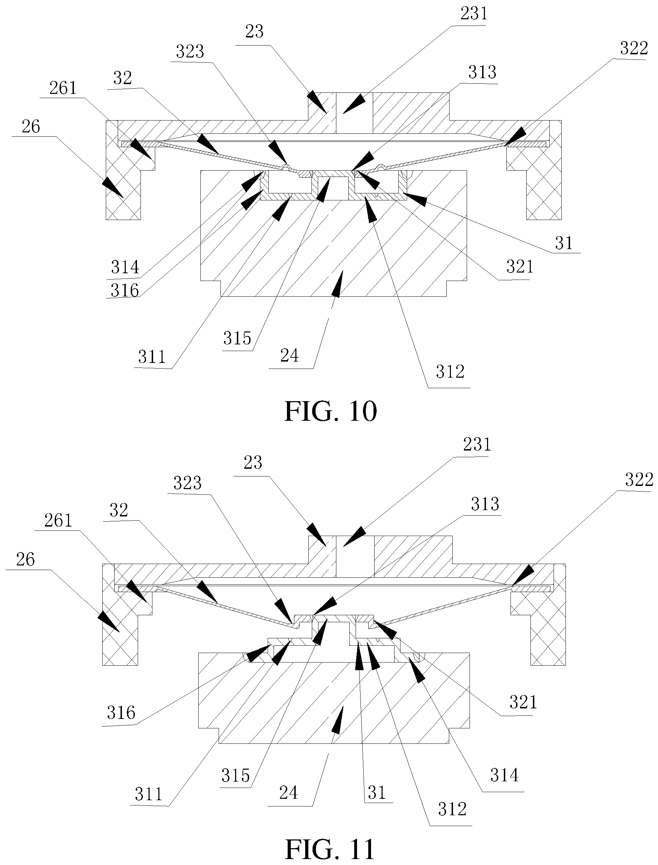

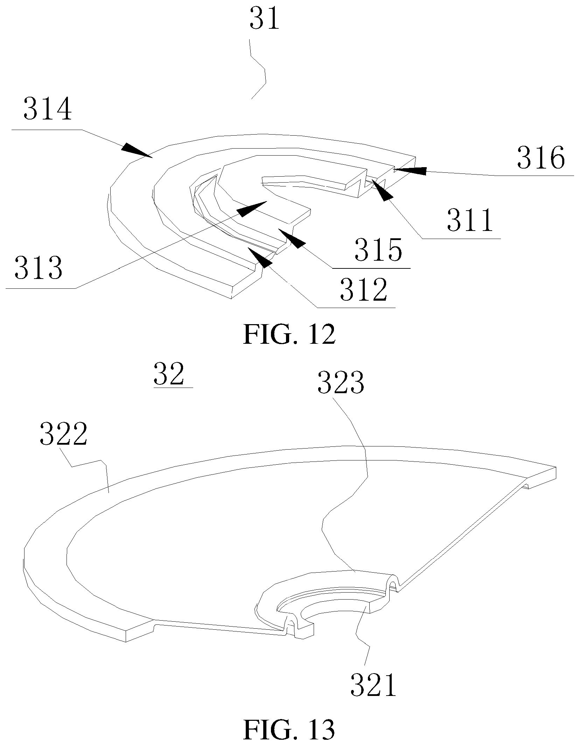

FIG. 1 to FIG. 9 are schematic structural diagrams of a battery system according to the present invention. FIG. 10 and FIG. 11 are schematic structural diagrams of a current interrupt device according to the present invention. FIG. 12 shows a score member according to the present invention. FIG. 13 shows a flipping member according to the present invention. As shown in FIG. 1 to FIG. 5, the battery system includes at least one series circuit, a pouch battery 10 and at least one first cell 20 connected to the pouch battery 10 in series being disposed in the series circuit, and a current interrupt device 30 being disposed on the first cell 20. The current interrupt device 30 on the first cell 20 is configured to interrupt an internal current of the first cell 20 to disconnect the entire series circuit when one or more cells in the series circuit are abnormal. The one or more cells are at least one of the pouch battery 10 and the first cell 20.

In an implementation of the present invention, the pouch battery 10 may include one pouch cell 11 or may include a plurality of pouch cells 11. The plurality of pouch cells 11 may be a plurality of pouch cells 11 connected in series, or a plurality of pouch cells 11 connected in parallel, or a plurality of pouch cells 11 connected in series and in parallel. The pouch cell 11 includes a pouch core and an electrode connected to the pouch core in series. An outer housing of the pouch cell 11 is an aluminum plastic film.

In the present invention, the series circuit may include one first cell 20 connected to the pouch battery 10 in series, or may include a plurality of first cells connected to the pouch battery 10 in series. The plurality of first cells 20 may be connected in parallel to form a battery pack (such as a battery pack 60 shown in FIG. 3 to FIG. 5) to be connected to the pouch battery 10 in series, or the plurality of first cells 20 may be connected to each other in series and then connected to the pouch battery 10 in series. In this solution, the plurality of first cells 20 and the plurality of pouch cells 11 may be alternately connected in series in the series circuit.

In the present invention, the first cell 20 includes a housing 21, a core accommodated in the housing, a cover plate 22 encapsulating the housing 21, an inner electrode terminal 24 located at an inner side of the cover plate 22, and an outer electrode terminal 23 located at an outer side of the cover plate 22. The inner electrode terminal 24 is electrically connected to the core, and the outer electrode terminal 23 may complete current input and output through various electrode lead-out members 40. The current interrupt device 30 may be disposed on the cover plate and is electrically connected to the outer electrode terminal 23 and the inner electrode terminal 24 respectively to control current input and output of the electrode terminals. In some embodiments, the housing is one of an aluminum housing, a steel housing, and a plastic housing, and a thickness of the housing is 0.4 mm to 1.5 mm.

In some embodiments, as shown in FIG. 1, that the current interrupt device 30 is not started means that the core and the electrode terminal are conducted, that is, the electrical connection between the outer electrode terminal 23 and the inner electrode terminal 24 is normal, and the current input and output may be performed normally to complete charging and discharging of the battery system.

As shown in FIG. 2, when one or more cells in the series circuit are abnormal, a heating temperature of the first cell 20 increases, and air pressure inside the cell increases, so that the current interrupt device 30 disposed on the first cell 20 is started to cut off the electrical connection between the outer electrode terminal 23 and the inner electrode terminal 24. In this way, the current input and output of the electrode terminal are interrupted, so that the series circuit is in an open state, thereby preventing thermal runaway of the battery system.

It should be noted that in FIG. 1 and FIG. 2, the battery system includes one series circuit, and only one first cell is disposed in the series circuit. In other implementations of the present invention, the battery system may also have a plurality of series circuits, and a plurality of first cells may also be disposed in each series circuit. The plurality of first cells may be connected in series at any position in the series circuit, or the plurality of first cells may be connected in parallel to form a battery pack to be connected to a pouch battery in series.

For example, in FIG. 3 to FIG. 5, two first cells are connected in parallel to form a battery pack 60 to be connected to the pouch battery 10 in series. As shown in FIG. 3, when the series circuit is in a normal state, a current interrupt device 30 in each first cell 20 of the battery pack 60 does not work. In this case, an inner electrode terminal 24 and an outer electrode terminal 23 of each first cell 20 are electrically connected normally, that is, an internal current of each first cell 20 is conducted, and the entire series circuit is normal in this case.

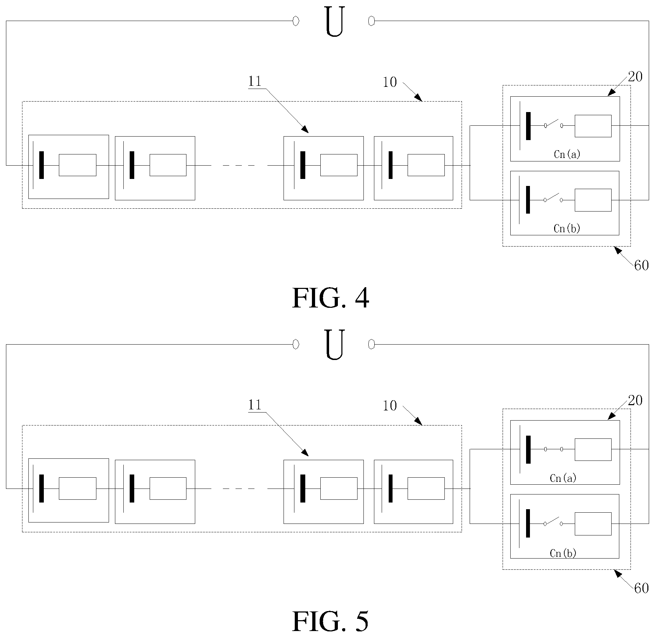

As shown in FIG. 4, when one or more cells in the series circuit are abnormal, the current interrupt device 30 in the first cell 20 of the battery pack 60 is triggered to be enabled, so that internal currents of first cells 20 (first cells Cn(a) and Cn(b)) are all in a disconnected state, thereby causing the entire series circuit to be disconnected. In this way, overcharging of the pouch battery 10 is avoided and protection of the pouch battery 10 is implemented.

As shown in FIG. 5, when a current interrupt device 30 on a first cell 20 in the battery pack 60 (such as a current interrupt device on the first cell Cn(b)) is started abnormally, an internal current of the first cell Cn(b) is interrupted, but an internal current of the other first cell Cn(a) connected to the first cell Cn(b) in parallel is still in a conducting state. Thus, the series circuit maintains a normal working state, and only a capacity is reduced. Therefore, a risk that the current interrupt device is abnormally enabled and the series circuit is powered off can be reduced, so that an external control system based on the battery system has sufficient emergency time for related processing.

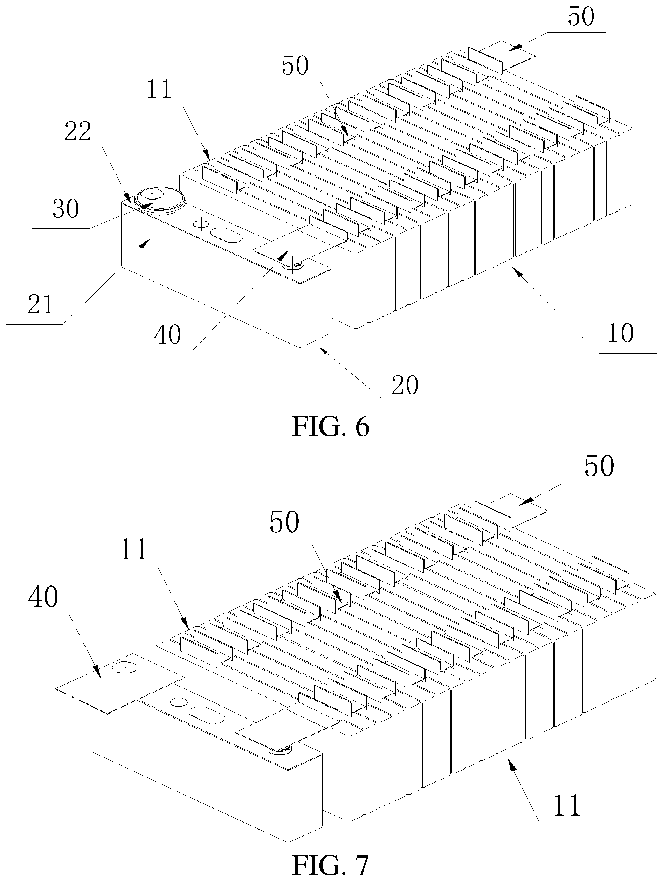

In the present invention, as shown in FIG. 6 to FIG. 9, the pouch battery 10 may include one or more pouch cells 11. When the pouch battery 10 includes a plurality of pouch cells 11, the plurality of pouch cells 11 are connected in series through a conductive connection member 50, or the plurality of pouch cells 11 are connected in parallel through a conductive connection member 50, or the plurality of pouch cells 11 are connected in series and in parallel through a conductive connection member 50. Each pouch cell 11 includes a pouch core and an electrode electrically connected to the pouch core. Electrodes between two adjacent pouch cells are connected in series or in parallel through the conductive connection member 50.

In the present invention, one pouch cell 11 in the pouch battery 10 is connected to the first cell 20 or the battery pack 60 in series, or a plurality of pouch cells 11 in the pouch battery 10 are respectively connected to a plurality of first cells 20 or a plurality of battery packs 60 in series. In some embodiments, a positive electrode (negative electrode) of one pouch cell 11 in the pouch battery 10 and a negative electrode (positive electrode) of the first cell 20 may be welded in series through a power connection sheet 40 or a positive electrode (negative electrode) of one pouch cell 11 in the pouch battery 10 and a negative lead (positive lead) of the battery pack may be welded in series. The pouch cell 11 connected to the first cell 20 or the battery pack in series may be located at an end of the pouch battery 10 or in the middle of the pouch battery 10. According to the present invention, a positive electrode (negative electrode) of a pouch cell 11 at an end of one side or ends of two sides of the pouch battery 10 and the negative electrode (positive electrode) of the first cell 20 are welded through the power connection sheet 40, or a positive electrode (negative electrode) of a pouch cell 11 at an end of one side or ends of two sides of the pouch battery 10 and the negative lead (positive lead) of the battery pack are welded through the power connection sheet 40.

In an implementation, as shown in FIG. 6 and FIG. 7, the positive electrode (negative electrode) of the first cell 20 is electrically connected to the negative electrode (positive electrode) of the pouch cell 11 at the end of one side of the pouch battery 10 through the power connection sheet 40, so that the first cell 20 and the pouch battery 10 are connected in series, and pouch cells 11 are connected in series or in parallel through the conductive connection member 50 to form the pouch battery 10.

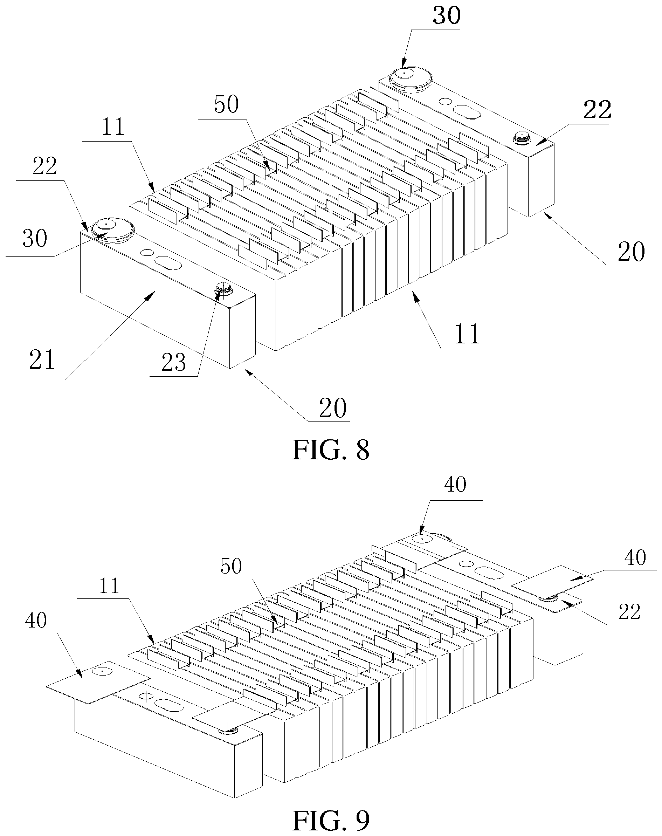

In another implementation, as shown in FIG. 8 and FIG. 9, the electrodes of the pouch cell 11 at the ends of the two sides of the pouch battery 10 are electrically connected to the first cell 20 through the power connection sheet 40, so that the pouch battery 10 is connected to two first cells in series in the series circuit.

According to the battery system provided in the present invention, a pouch cell 11 at the end of the pouch battery 10 may also be electrically connected to the positive lead of the battery pack or the negative lead of the battery pack through the power connection sheet 40, so that a series connection between the pouch battery 10 and the battery pack 60 is completed. The battery pack 60 includes the plurality of first cells 20 connected in parallel. According to the battery system provided in the present invention, when the pouch battery 10 includes a plurality of pouch cells connected in series or in parallel, the first cell 20 may be connected in series in the middle of the pouch battery 10, or the battery pack 60 may be connected in series in the middle of the pouch battery 10.

In the present invention, the current interrupt device 30 may be disposed at any appropriate position on the cover plate 22. In some embodiments, in an implementation, as shown in FIG. 6 to FIG. 9, the current interrupt device 30 may be mounted on one of outer electrode terminals 23 of the first cell 20, and a part of the power connection sheet 40 covers the current interrupt device 30, and the other part extends.

Reliability of the current interrupt device as an important safety measure is crucial, that is, the current interrupt device needs to make a response quickly.

In the present invention, all current interrupt devices in the various implementations are mechanical structures for sensing air pressure. In some embodiments, the current interrupt device is in gas communication with an inside of a cell and can interrupt an internal current of the cell under an effect of the air pressure. In some embodiments, current transfer can be interrupted by disconnecting internal components, thereby cutting off charging and discharging of the cell in time. A source of the used air pressure is as follows: For example, when the cell is in an abnormal state such as overcharging, gas is generated inside the cell, resulting in an increase of the air pressure inside the housing, or when a temperature rises due to an abnormality during use of the cell, the air pressure inside the cell increases, resulting in pneumatic power that drives the current interrupt device.

For example, in the implementations of FIG. 10 and FIG. 11, the current interrupt device 30 has a score member 31 and a flipping member 32 electrically connected to the score member 31, and the electrical connection between the flipping member 32 and the score member 31 can be cut off under the effect of the air pressure. In the implementations of the present invention, a weak score may be made on a corresponding component to break the structure, thereby cutting off the electrical connection. In some embodiments, a score 311 is formed on the score member 31. In other words, under the effect of the internal air pressure, the score 311 may be broken through a flipping action of the flipping member 32, so as to cut off the electrical connection between the flipping member and the score member, thereby interrupting the current transfer.

A reason for adopting this method is that, for example, in the field of power batteries, a relatively large flowing current is required. Therefore, a welding structure between the score member 31 and the flipping member 32 needs to be stable to prevent the large current from fusing the welding structure. Therefore, by disposing the score 311 on the score member 31, that is, making a weak portion with strength less than that of other regions in the corresponding part, the score member 31 and the flipping member 32 can be completely disconnected. The score is usually disposed around the welding region between the score member and the flipping member, to ensure complete disconnection between the score member and the flipping member.

The score member 31 and the flipping member 32 in the two implementations of the present invention are described below with reference to FIG. 10 and FIG. 11.

As shown in FIG. 10 and FIG. 11, the present invention provides a score member in a current interrupt device. The score member 31 includes a score region 312 in which a score 311 is formed, a first welding region 313 to be electrically connected to the flipping member 32, and a second welding region 314 to be electrically connected to the inner electrode terminal. The flipping member 32 can act under an effect of air pressure to break the score 311 so as to cut off an electrical connection to the score member 31. After the flipping member 32 breaks the score 311, an electrical connection between the flipping member 32 and the second welding region 314 is cut off, thereby cutting off an electrical connection to the inner electrode terminal 24. In the present invention, the score 311 is disposed around the first welding region 313, and the score 311 may be a ring surrounding the first welding region 313. In addition, at least one of the first welding region 313 and the second welding region 314 is disposed in a plane different from a plane in which the score 311 is disposed. In other words, the plane on which the score 311 is located is different from the planes/plane on which the first welding region 313 and/or the second welding region 314 are/is located, so that not only mechanical impact on the score 311 on the score member 31 caused by an external force transmitted from the flipping member 32 can be effectively eliminated, but also thermal influence of welding stresses in the first welding region 313 and the second welding region 314 on a region in which the score 311 is located can be eliminated. In this way, reliability of the current interrupt device provided in the present invention is improved. The score 311 surrounding the first welding region 313 can be broken under the effect of the air pressure inside the cell. In this case, the electrical connection between the flipping member 32 and the score member 31 is completely cut off to interrupt the current.

As shown in FIG. 10 and FIG. 11, the score 311 is disposed in a plane different from planes in which the first welding region 313 and the second welding region 314 are disposed, that is, a plane in which the score 311 is located is different from a plane in which the first welding region 313 is located and the plane in which the score 311 is located is also different from a plane in which the second welding region 314 is located. More preferably, the score member 31 includes a score region 312 and a boss 106 protruding from the score region 312, the first welding region 313 is formed on the boss 315, and the score 311 is formed on the score region 312 and disposed around the boss 315, so that the plane in which the score is located is different from the plane in which the first welding region is located and the plane in which the second welding region is located. In some embodiments, the first welding region 313 is formed by an upper surface of the boss 315 and is parallel to the score region 312, and an annular welding joint is disposed on an outer periphery of the upper surface.

As shown in FIG. 11 and FIG. 12, in a second implementation, the second welding region 314, the score region 312, and the first welding region 313 are sequentially arranged from outside to inside in a radial direction, and form a step structure gradually approaching the flipping member 32 from outside to inside. The second welding region 314 and the score region 312 are also located on different planes. The formed step structure has a cushion effect, so that the thermal influence of the welding stresses of the two welding regions on the score 311 can be avoided, and an external force transmitted from the inner electrode terminal can also be cushioned, making the current interrupt device more reliable.

In the two implementations of the present invention, as shown in FIG. 10 or FIG. 11, the score member 31 includes a score region 312 and a boss 315 protruding from the score region 312. The first welding region 313 is formed on the boss 315, and the score 311 is formed on the score region 312 and disposed around the boss 315. In this way, the score and the first welding region are disposed on different planes. In some embodiments, the first welding region 313 is formed on an upper surface of the boss 315 and is parallel to the score region 312, and an annular welding joint is disposed at an outer periphery of the upper surface. Correspondingly, a first connection region 321 on the flipping member 32 may form a connecting hole for accommodating the boss 315. In this way, the outer periphery of the boss 315 and an inner wall of the connecting hole are firmly welded by using the annular welding joint. The boss 315 may be a cylindrical structure or a through hole may be disposed in an axial direction of the cylindrical structure, as shown in FIG. 4. In other implementations, the score and the first welding region may be disposed on different planes by using various convex or concave structures.

As shown in FIG. 10, in a first implementation, in order to establish an electrical connection to the inner electrode terminal 24 of the battery, an accommodating groove is usually disposed on the top end of the inner electrode terminal 24. Accordingly, a ring wall 316 protruding in a direction the same as a direction in which the boss 315 protrudes is formed at an outer periphery of the score region 312, an upper edge of the ring wall 316 being flush with an upper edge of the boss 315 in a height direction. In addition, an outer wall of the ring wall is to be electrically connected to the inner electrode terminal 24 of the battery to form the first welding region 313. The outer wall fits a shape of a groove wall of the accommodating groove of the inner electrode terminal 24 and is welded through the annular welding joint. In this implementation, the score member 31 can be completely accommodated in the accommodating groove of the inner electrode terminal 24. The structure is stable.

As shown in FIG. 11, in the second implementation, an accommodating groove is still disposed on the inner electrode terminal 24, the boss 315 of the score member 31 extending out of the accommodating groove. In some embodiments, a ring wall 316 protruding in a direction opposite to the direction in which the boss 315 protrudes is formed at the outer periphery of the score region 312, and the second welding region 314 is formed at an outer periphery of the ring wall 316 and is parallel to the score region 312, so that the score member 31 forms the step structure. An annular welding joint to be electrically connected to the inner electrode terminal 24 of the battery is formed at an outer periphery of the second welding region 314. In some embodiments, a lower surface of the second welding region 314 may be placed on the bottom wall of the accommodating groove, and the outer periphery and a sidewall of the accommodating groove are welded through the annular welding joint. Likewise, the structure is also stable.

In the second implementation, as shown in FIG. 11, a sidewall of the boss 315 and the ring wall 316 are perpendicular to the score region 312 respectively. In other embodiments, there may be a specific angle, for example, a Z-shaped step is formed. In addition, the first welding region 313, the score region 312, and the second welding region 314 may each be a ring structure, that is, the first welding region 313 has a central hole. In other embodiments, the first welding region 313 may have no central hole.

The score member 31 in the two implementations is described above, and the flipping member 32 in the two implementations is described below.

A first connection region 321 to be electrically connected to the score member 31 and a second connection region 322 to be electrically connected to an outer electrode terminal 23 of a battery are formed on the flipping member 32. In addition, a deformation cushion region 323 is further formed on the flipping member 32, the deformation cushion region 323 being disposed between the first connection region 321 and the second connection region 322 and around the first connection region 321. The deformation cushion region means that the region may be deformed prior to the flipping member 32, the first connection region 321, the second connection region 322, and the score member 31 under an effect of an external force, so as to cushion the external force. Accordingly, impact of the external force on the first connection region 321 and the score 311 on the score member 31 is reduced, improving the reliability of the current interrupt device.

In the two implementations of the present invention, the flipping member 32 is a sheet structure in the shape of a cone, a small end of the cone forming the first connection region 321, and a large end of the cone away from the score member 31 forming the second connection region 322. The cone structure may be used to dispose the two connection regions on different planes and provide a space for the flipping member 32 to flip upward under a force to break the score 311. In other possible implementations, the flipping member may also be an elastic flat member or the like.

As shown in FIG. 10 and FIG. 11, the deformation cushion region 323 in the present invention forms an annular groove structure surrounding the first connection region 321. In this way, a deformation cushion effect can be achieved through relative movement between groove walls of the annular groove under an effect of an external force. In other possible implementations, the deformation cushion region 323 may also be implemented by a structure such as a deformation chamber or elastic materials.

As shown in FIG. 10 and FIG. 13, in the first implementation, a radial cross-section of the annular groove structure is arc-shaped, for example, is a semi-circle protruding toward the outer electrode terminal 23. In this way, an external force transmitted from the second connection region 322 can be absorbed through the deformation of the arc-shaped groove wall, thereby reducing impact on the first connection region 321 and the score member 31.

As shown in FIG. 11, in the second implementation, the radial cross-section of the annular groove structure may further be angular, so that both sides of the angular shape are two groove walls and can also be deformed under the effect of external force. In some embodiments, in the second implementation, the boss 315 of the score member 31 protrudes from the accommodating groove of the inner electrode terminal. In this case, in order to save space, the angular ring-shaped groove may be designed to protrude facing the score member 31, and the bottom of the groove is formed on one side of the boss, so that the entire flipping member 32 can be formed into a Z-shaped structure to achieve cushioning of the external force.

As shown in FIG. 10 and FIG. 11, in the two implementations of the present invention, in order to ensure that the flipping member can be acted by gas inside the battery, a support ring 26 is connected between a lower side of an outer periphery of the flipping member 32 and the cover plate 22 in a sealing manner, and an outer periphery of the outer electrode terminal 23 is electrically connected to an upper side of the outer periphery of the flipping member 32. In this way, the gas generated inside the battery can act on the flipping member 32 without leakage. In order to enable the flipping member 32 to act normally, the outer electrode terminal 23 forms a cap structure and may have a through hole 231 for discharging gas during acting of the flipping member 32, thereby preventing the acting of the flipping member from being restored under the action of the air pressure. In addition, in two implementations in which the cover plate 22 is conductive and insulative, an insulating material or a conductive material may be selected for the support ring 26 for supporting. Generally, the support ring 26 may be a ceramic ring so that the cover plate 22 is insulative. In some embodiments, a support flange 261 is formed on an inner wall of the support ring 26, the outer peripheries of the flipping member 32 and the outer electrode terminal 23 being supported on an upper surface of the support flange 261, so as to ensure stable working of the current interrupt device.

The first cell provided in the present invention further includes a housing, the core being accommodated in the housing. The first cell further includes a cover plate assembly that encapsulates the housing, where the inner electrode terminal is electrically connected to the core, and the flipping member is in gas communication with an interior of the housing. The cover plate assembly includes a cover plate, an inner electrode terminal 213 located at an inner side of the cover plate, and an outer electrode terminal 214 located at an outer side of the cover plate. The inner electrode terminal 213 and the outer electrode terminal 214 are electrically connected by using the foregoing current interrupt device. The outer electrode terminal 214 is electrically connected to the flipping member 222, and the score member 221 is electrically connected to the inner electrode terminal 213.

The inner electrode terminal 213 is welded to an inner lead-out member electrically connected to a core. In some embodiments, a welding hole may be formed on the inner lead-out member. The inner electrode terminal 213 forms a columnar structure and is embedded in the welding hole to be welded to the inner lead-out member. In order to prevent the cover plate from being energized, a cover plate insulating member is disposed between the cover plate and the inner lead-out member, and the inner electrode terminal may pass through the cover plate insulating member with a gap to be welded to the score member. In order to ensure sealing performance, a support ring is further included. A lower end of the support ring is welded to the cover plate. A ceramic material may be used to ensure the insulation of the current interrupt device and the cover plate. A duct is formed on the cover plate to facilitate mounting of the current interrupt device. In addition, in order to ensure that the gas inside the battery can act on the flipping member 222, an air hole is formed on the inner lead-out member, so that the gas can act on the flipping member 222 through the air hole.

A battery system is disclosed, including at least one series circuit, a pouch battery and at least one first cell connected to the pouch battery in series being disposed in the series circuit, and a current interrupt device being disposed on the first cell; and the current interrupt device of the first cell being configured to interrupt an internal current of the first cell when at least one of the pouch battery and the first cell is abnormal.

In some embodiments, the series circuit includes a plurality of first cells connected to the pouch battery in series, the plurality of first cells being sequentially connected in series or being alternately connected in series.

In some embodiments, the series circuit includes a plurality of first cells connected to the pouch battery in series, the plurality of first cells being connected in parallel to form a battery pack to be connected to the pouch battery in series.

In some embodiments, the first cell includes a housing, a core accommodated in the housing, a cover plate encapsulating the housing, an inner electrode terminal located at an inner side of the cover plate, and an outer electrode terminal located at an outer side of the cover plate, the inner electrode terminal being electrically connected to the core, and the current interrupt device being disposed on the cover plate and electrically connected to the outer electrode terminal and the inner electrode terminal respectively.

In some embodiments, the housing is one of an aluminum housing, a steel housing, and a plastic housing, and a thickness of the housing is 0.4 mm to 1.5 mm.

In some embodiments, the current interrupt device includes a score member and a flipping member, the score member being electrically connected to the inner electrode terminal, and the flipping member being electrically connected to the score member and the outer electrode terminal respectively and being in gas communication with an inside of the first cell.

In some embodiments, the score member includes a score region in which a score is formed, a first welding region to be electrically connected to the flipping member, and a second welding region to be electrically connected to the inner electrode terminal, the flipping member can act under an effect of air pressure to break the score, and the flipping member may be disconnected from the inner electrode terminal after breaking the score, the score being disposed around the first welding region, and at least one of the first welding region and the second welding region being disposed in a plane different from a plane in which the score is disposed.

In some embodiments, the score is disposed in a plane different from planes in which the first welding region and the second welding region are disposed.

In some embodiments, a boss protruding from the score region is formed on the score member, the first welding region being formed on an upper surface of the boss and parallel to the score region, and an annular welding joint being disposed at an outer periphery of the upper surface.

In some embodiments, a ring wall protruding in a direction same as a direction in which the boss protrudes is formed at an outer periphery of the score region, an upper edge of the ring wall being flush with an upper edge of the boss in a height direction, and an outer wall of the ring wall being to be electrically connected to the inner electrode terminal.

In some embodiments, the second welding region, the score region, and the first welding region are sequentially arranged from outside to inside in a radial direction, and form a step structure gradually approaching the flipping member from outside to inside, and the score is disposed around the first welding region.

In some embodiments, a ring wall protruding in a direction opposite to a direction in which the boss protrudes is formed at the outer periphery of the score region, the second welding region being formed at an outer periphery of the ring wall and parallel to the score region, and an annular welding joint being formed at an outer periphery of the second welding region.

In some embodiments, a sidewall of the boss and the ring wall are perpendicular to the score region respectively.

In some embodiments, the first welding region, the score region, and the second welding region respectively form a ring structure.

In some embodiments, a first connection region to be electrically connected to the score member and a second connection region to be electrically connected to the outer electrode terminal are formed on the flipping member, and a deformation cushion region is further formed on the flipping member, the deformation cushion region being disposed in the first connection region.

In some embodiments, the flipping member is a sheet structure in the shape of a cone, a small end of the cone forming the first connection region, and a large end of the cone away from the score member forming the second connection region.

In some embodiments, the deformation cushion region forms an annular groove structure surrounding the first connection region.

In some embodiments, a radial cross-section of the annular groove structure is arc-shaped or angular.

In some embodiments, a support ring is connected between a lower side of an outer periphery of the flipping member and the cover plate in a sealing manner, and an outer periphery of the outer electrode terminal is electrically connected to an upper side of the outer periphery of the flipping member.

In some embodiments, a support flange is formed on an inner wall of the support ring, the outer peripheries of the flipping member and the outer electrode terminal being supported on an upper surface of the support flange.

Correspondingly, the present invention further provides an electric vehicle, including the foregoing battery system.

The implementations of the present invention are described above in detail with reference to the accompanying drawings, but the present invention is not limited to the specific details in the above implementations. Various simple variations may be made to the technical solutions of the present invention within the scope of the technical idea of the present invention, which is defined by the appended claims and such simple variations shall all fall within the protection scope of the present invention.

It should be further noted that the specific technical features described in the above specific embodiments may be combined in any suitable manner without contradiction. To avoid unnecessary repetition, various possible combinations are not further described in the present disclosure.

In addition, the various embodiments of the present invention may be combined without departing from the idea of the present invention, and such combinations shall also fall within the scope of the present invention, as defined by the appended claims.

### DESCRIPTION OF REFERENCE NUMERALS

10. Pouch battery; 11. Pouch cell; 20. First cell; 21. Housing; 22. Cover plate; 23. Outer electrode terminal; 231. Through hole; 24. Inner electrode terminal; 26. Support ring; 261. Support flange; 30. Current interrupt device; 31. Score member; 311. Score; 312. Score region; 313. First welding region; 314. Second welding region; 315. Boss; 316. Ring wall; 32. Flipping member; 321. First connection region; 322. Second connection region; 323. Deformation cushion region; 40. Power connection sheet; 50. Conductive connection member; 60. Battery pack.

## Claims

1. A battery system, comprising at least one series circuit, a pouch battery (10) and at least one first cell (20) connected to the pouch battery (10) in series being disposed in the series circuit, and a current interrupt device (30) being disposed on the first cell (20); and
the current interrupt device (30) of the first cell (20) being configured to interrupt an internal current of the first cell (20) when at least one of the pouch battery (10) and the first cell (20) is abnormal, by, when one or more cells in the series circuit are abnormal, the one or more cells are at least one of the pouch battery and the first cell, a heating temperature of the first cell increases, and an air pressure in the first cell increases, so that the current interrupt device (30) disposed on the first cell (20) is started to cut off the electrical connection between an outer electrode terminal (23) and an inner electrode terminal (24).

2. The battery system according to claim 1, wherein the series circuit comprises a plurality of first cells (20) connected to the pouch battery (10) in series, the plurality of first cells (20) being sequentially connected in series or being alternately connected in series, or wherein the series circuit comprises a plurality of first cells (20) connected to the pouch battery (10) in series, the plurality of first cells (20) being connected in parallel to form a battery pack to be connected to the pouch battery (10) in series.

3. The battery system according to any of claims 1 or 2, wherein the first cell (20) comprises a housing, a core accommodated in the housing, a cover plate (22) encapsulating the housing, an inner electrode terminal (24, 213) located at an inner side of the cover plate (22), and an outer electrode terminal (214) located at an outer side of the cover plate (22), the inner electrode terminal (24, 213) being electrically connected to the core, and the current interrupt device (30) being disposed on the cover plate (22) and electrically connected to the outer electrode terminal (214) and the inner electrode terminal (24, 213) respectively.

4. The battery system according to claim 3, wherein the housing is one of an aluminum shell, a steel shell, and a plastic housing, and a thickness of the housing is 0.4 mm to 1.5 mm.

5. The battery system according to claim 4, wherein the current interrupt device (30) comprises a score member (31, 221) and a flipping member (32, 222), the score member (31, 221) being electrically connected to the inner electrode terminal (24, 213), and the flipping member (32, 222) being electrically connected to the score member (31, 221) and the outer electrode terminal (214) respectively and being in gas communication with an inside of the first cell (20).

6. The battery system according to claim 5, wherein the score member (31, 221) comprises a score region (312) in which a score (311) is formed, a first welding region (313) to be electrically connected to the flipping member (32, 222), and a second welding region (314) to be electrically connected to the inner electrode terminal (24, 213), and the flipping member (32, 222) can act under an effect of air pressure to break the score (311), the score (311) being disposed around the first welding region (313), and at least one of the first welding region (313) and the second welding region (314) being disposed in a plane different from a plane in which the score (311) is disposed.

7. The battery system according to claim 6, wherein the score (311) is disposed in a plane different from planes in which the first welding region (313) and the second welding region (314) are disposed.

8. The battery system according to claim 7, wherein a boss (315) protruding from the score region (312) is formed on the score member (31, 221), the first welding region (313) being formed on an upper surface of the boss (315) and parallel to the score region (312), and an annular welding joint being disposed at an outer periphery of the upper surface.

9. The battery system according to claim 8, wherein a ring wall (316) protruding in a direction same as a direction in which the boss (315) protrudes is formed at an outer periphery of the score region (312), an upper edge of the ring wall (316) being flush with an upper edge of the boss (315) in a height direction, and an outer wall of the ring wall (316) being to be electrically connected to the inner electrode terminal (24, 213).

10. The battery system according to claim 8 or 9, wherein the second welding region (314), the score region (312), and the first welding region (313) are sequentially arranged from outside to inside in a radial direction, and form a step structure gradually approaching the flipping member (32, 222) from outside to inside, and the score (311) is disposed around the first welding region (313), particularly wherein a ring wall (316) protruding in a direction opposite to a direction in which the boss (315) protrudes is formed at the outer periphery of the score region (312), the second welding region (314) being formed at an outer periphery of the ring wall (316) and parallel to the score region (312), and an annular welding joint being formed at an outer periphery of the second welding region (314), particularly wherein a sidewall of the boss (315) and the ring wall (316) are perpendicular to the score region (312) respectively.

11. The battery system according to any of claims 6 to 10, wherein the first welding region (313), the score region (312), and the second welding region (314) respectively form a ring structure.

12. The battery system according to any of claims 5 to 11, wherein a first connection region (321) to be electrically connected to the score member (31, 221) and a second connection region (322) to be electrically connected to the outer electrode terminal (214) are formed on the flipping member (32, 222), and a deformation cushion region (323) is further formed on the flipping member (32, 222), the deformation cushion region (323) being disposed in the first connection region (321).

13. The battery system according to claim 12, wherein the flipping member (32, 222) is a sheet structure in the shape of a cone, a small end of the cone forming the first connection region (321), and a large end of the cone away from the score member (31, 221) forming the second connection region (322).

14. The battery system according to claim 12 or 13, wherein the deformation cushion region (323) forms an annular groove structure surrounding the first connection region (321), particularly wherein a radial cross-section of the annular groove structure is arc-shaped or angular.

15. The battery system according to any of claims 5 to 14, wherein a support ring (26) is connected between a lower side of an outer periphery of the flipping member (32, 222) and the cover plate (22) in a sealing manner, and an outer periphery of the outer electrode terminal (214) is electrically connected to an upper side of the outer periphery of the flipping member (32, 222), particularly wherein a support flange (261) is formed on an inner wall of the support ring (26), the outer peripheries of the flipping member (32, 222) and the outer electrode terminal (214) being supported on an upper surface of the support flange (261).

16. An electric vehicle, comprising the battery system according to any of claims 1 to 15.

## Patentansprüche

1. Batteriesystem, das mindestens eine Reihenschaltung, eine Beutelbatterie (10) und mindestens eine erste Zelle (20) umfasst, die mit der Beutelbatterie (10) in Reihe geschaltet und in der Reihenschaltung angeordnet ist, sowie eine Stromunterbrechungsvorrichtung (30), die an der ersten Zelle (20) angeordnet ist; und
wobei die Stromunterbrechungsvorrichtung (30) der ersten Zelle (20) dazu konfiguriert ist, dass sie einen internen Strom der ersten Zelle (20) unterbricht, wenn mindestens eine der Taschenbatterien (10) und der ersten Zellen (20) abnormal ist, indem, wenn eine oder mehrere Zellen in der Reihenschaltung abnormal sind, die eine oder mehreren Zellen mindestens eine der Taschenbatterie und der ersten Zelle sind, eine Erwärmungstemperatur der ersten Zelle ansteigt und ein Luftdruck in der ersten Zelle ansteigt, so dass die an der ersten Zelle (20) angeordnete Stromunterbrechungsvorrichtung (30) gestartet wird, um die elektrische Verbindung zwischen einem äußeren Elektrodenanschluss (23) und einem inneren Elektrodenanschluss (24) zu unterbrechen.

2. Batteriesystem gemäß Anspruch 1, wobei die Reihenschaltung eine Vielzahl von ersten Zellen (20) umfasst, die mit der Beutelbatterie (10) in Reihe geschaltet sind, wobei die Vielzahl von ersten Zellen (20) sequenziell in Reihe geschaltet oder abwechselnd in Reihe geschaltet sind, oder wobei die Reihenschaltung eine Vielzahl von ersten Zellen (20) umfasst, die mit der Beutelbatterie (10) in Reihe geschaltet sind, wobei die Vielzahl von ersten Zellen (20) parallel geschaltet sind, um einen Batteriepack zu bilden, der mit der Beutelbatterie (10) in Reihe geschaltet wird.

3. Batteriesystem gemäß einem der Ansprüche 1 oder 2, wobei die erste Zelle (20) ein Gehäuse, einen in dem Gehäuse untergebrachten Kern, eine das Gehäuse umschließende Abdeckplatte (22), einen an einer Innenseite der Abdeckplatte (22) angeordneten inneren Elektrodenanschluss (24, 213) und einen äußeren Elektrodenanschluss (214), der sich an einer Außenseite der Abdeckplatte (22) befindet, wobei der innere Elektrodenanschluss (24, 213) elektrisch mit dem Kern verbunden ist und die Stromunterbrechungsvorrichtung (30) auf der Abdeckplatte (22) angeordnet und elektrisch mit dem äußeren Elektrodenanschluss (214) bzw. dem inneren Elektrodenanschluss (24, 213) verbunden ist.

4. Batteriesystem gemäß Anspruch 3, wobei das Gehäuse entweder ein Aluminiumgehäuse, ein Stahlgehäuse oder ein Kunststoffgehäuse ist und eine Dicke von 0,4 mm bis 1,5 mm aufweist.

5. Batteriesystem gemäß Anspruch 4, wobei die Stromunterbrechungsvorrichtung (30) ein Kerbelement (31, 221) und ein Klappelement (32, 222) umfasst, wobei das Kerbelement (31, 221) elektrisch mit dem inneren Elektrodenanschluss (24, 213) verbunden ist und das Klappelement (32, 222) elektrisch mit dem Kerbelement (31, 221) bzw. dem äußeren Elektrodenanschluss (214) verbunden ist und in Gasverbindung mit dem Inneren der ersten Zelle (20) steht.

6. Batteriesystem gemäß Anspruch 5, wobei das Kerbelement (31, 221) einen Kerbbereich (312), in dem eine Kerbe (311) ausgebildet ist, einen ersten Schweißbereich (313), der elektrisch mit dem Klappelement (32, 222) verbunden ist, und einen zweiten Schweißbereich (314), der elektrisch mit dem inneren Elektrodenanschluss (24, 213) verbunden werden soll, und das Klappelement (32, 222) unter dem Einfluss von Luftdruck wirken kann, um die Kerbe (311) zu brechen, wobei die Kerbe (311) um den ersten Schweißbereich (313) herum angeordnet ist und mindestens einer der ersten Schweißbereiche (313) und der zweiten Schweißbereiche (314) in einer Ebene angeordnet sind, die sich von der Ebene unterscheidet, in der die Kerbe (311) angeordnet ist.

7. Batteriesystem gemäß Anspruch 6, wobei die Kerbe (311) in einer Ebene angeordnet ist, die sich von den Ebenen unterscheidet, in denen der erste Schweißbereich (313) und der zweite Schweißbereich (314) angeordnet sind .

8. Batteriesystem gemäß Anspruch 7, wobei ein Vorsprung (315), der aus dem Kerbbereich (312) herausragt, an dem Kerbelement (31, 221) ausgebildet ist, wobei der erste Schweißbereich (313) an einer Oberseite des Vorsprungs (315) und parallel zu dem Kerbbereich (312) ausgebildet ist und eine ringförmige Schweißverbindung an einem Außenumfang der Oberseite angeordnet ist.

9. Batteriesystem gemäß Anspruch 8, wobei eine Ringwand (316), die in derselben Richtung wie die Ausbuchtung (315) vorsteht, an einem Außenumfang des Einkerbungsbereichs (312) ausgebildet ist, wobei eine Oberkante der Ringwand (316) in Höhenrichtung bündig mit einer Oberkante des Vorsprungs (315) ist und eine Außenwand der Ringwand (316) elektrisch mit dem inneren Elektrodenanschluss (24, 213) verbunden ist.

10. Batteriesystem gemäß Anspruch 8 oder 9, wobei der zweite Schweißbereich (314), der Kerbbereich (312) und der erste Schweißbereich (313) in radialer Richtung von außen nach innen nacheinander angeordnet sind und eine Stufenstruktur bilden, die sich von außen nach innen allmählich dem Klappelement (32, 222) nähert, und die Kerbe (311) um den ersten Schweißbereich (313) herum angeordnet ist, wobei insbesondere eine Ringwand (316), die in einer Richtung entgegengesetzt zu einer Richtung, in der der Vorsprung (315) vorsteht, vorsteht, am Außenumfang des Ritzbereichs (312) ausgebildet ist, wobei der zweite Schweißbereich (314) an einem Außenumfang der Ringwand (316) und parallel zum Ritzbereich (312) ausgebildet ist und eine ringförmige Schweißnaht an einem Außenumfang des zweiten Schweißbereichs (314) ausgebildet ist, wobei insbesondere eine Seitenwand des Vorsprungs (315) und die Ringwand (316) jeweils senkrecht zum Ritzbereich (312) stehen.

11. Batteriesystem gemäß einem der Ansprüche 6 bis 10, wobei der erste Schweißbereich (313), der Ritzbereich (312) und der zweite Schweißbereich (314) jeweils eine Ringstruktur bilden.

12. Batteriesystem gemäß einem der Ansprüche 5 bis 11, wobei ein erster Verbindungsbereich (321), der elektrisch mit dem Kerbelement (31, 221) verbunden werden soll, und ein zweiter Verbindungsbereich (322), der elektrisch mit dem äußeren Elektrodenanschluss (214) verbunden werden soll, auf dem Klappelement (32, 222) ausgebildet sind, und ein Verformungskissenbereich (323) ist ferner auf dem Klappelement (32, 222) ausgebildet, wobei der Verformungskissenbereich (323) in dem ersten Verbindungsbereich (321) angeordnet ist.

13. Batteriesystem gemäß Anspruch 12, wobei das Klappelement (32, 222) eine Blechstruktur in Form eines Kegels ist, wobei ein kleines Ende des Kegels den ersten Verbindungsbereich (321) bildet und ein großes Ende des Kegels, das vom Kerbelement (31, 221) entfernt ist, den zweiten Verbindungsbereich (322) bildet.

14. Batteriesystem gemäß Anspruch 12 oder 13, wobei der Verformungskissenbereich (323) eine ringförmige Nutstruktur bildet, die den ersten Verbindungsbereich (321) umgibt, insbesondere wobei ein radialer Querschnitt der ringförmigen Nutstruktur bogenförmig oder eckig ist.

15. Batteriesystem gemäß einem der Ansprüche 5 bis 14, wobei ein Stützring (26) zwischen einer Unterseite eines Außenumfangs des Klappelements (32, 222) und der Abdeckplatte (22) in abdichtender Weise verbunden ist und ein Außenumfang des Außenelektrodenanschlusses (214) elektrisch mit einer Oberseite des Außenumfangs des Klappelements (32, 222) elektrisch verbunden ist, wobei insbesondere ein Stützflansch (261) an einer Innenwand des Stützrings (26) ausgebildet ist, wobei die Außenumfänge des Klappelements (32, 222) und des Außenelektrodenanschlusses (214) auf einer Oberseite des Stützflansches (261) abgestützt sind.

16. Elektrofahrzeug, umfassend das Batteriesystem gemäß einem der Ansprüche 1 bis 15.

## Revendications

1. Système de batterie, comprenant au moins un circuit en série, une batterie souple (10) et au moins une première cellule (20) connectée à la batterie souple (10) en série, disposée dans le circuit en série, et un dispositif d'interruption de courant (30) disposé sur la première cellule (20) ; et
le dispositif d'interruption de courant (30) de la première cellule (20) étant configuré pour interrompre un courant interne de la première cellule (20) lorsqu'au moins l'une parmi la batterie souple (10) et la première cellule (20) est anormale, de telle sorte que, lorsqu'une ou plusieurs cellules du circuit en série sont anormales, la ou les cellules sont au moins l'une parmi la batterie souple et la première cellule, la température de chauffage de la première cellule augmente et la pression d'air dans la première cellule augmente, de sorte que le dispositif d'interruption de courant (30) disposé sur la première cellule (20) commence à couper la connexion électrique entre une borne d'électrode externe (23) et une borne d'électrode interne (24).

2. Système de batterie selon la revendication 1, dans lequel le circuit série comprend une pluralité de premières cellules (20) connectées en série à la batterie souple (10), la pluralité de premières cellules (20) étant connectées en série de manière séquentielle ou en série de manière alternée, ou dans lequel le circuit en série comprend une pluralité de premières cellules (20) connectées en série à la batterie souple (10), la pluralité de premières cellules (20) étant connectées en parallèle pour former un bloc de batterie à connecter en série à la batterie souple (10).

3. Système de batterie selon l'une quelconque des revendications 1 ou 2, dans lequel la première cellule (20) comprend un boîtier, un noyau logé dans le boîtier, une plaque de couverture (22) encapsulant le boîtier, une borne d'électrode interne (24, 213) située sur un côté interne de la plaque de couverture (22), et une borne d'électrode externe (214) située sur un côté externe de la plaque de recouvrement (22), la borne d'électrode interne (24, 213) étant connectée électriquement au noyau, et le dispositif d'interruption de courant (30) étant disposé sur la plaque de recouvrement (22) et connecté électriquement à la borne d'électrode externe (214) et à la borne d'électrode interne (24, 213) respectivement.

4. Système de batterie selon la revendication 3, dans lequel le boîtier est l'un parmi une coque en aluminium, une coque en acier et un boîtier en plastique, et l'épaisseur du boîtier est comprise entre 0,4 mm et 1,5 mm.

5. Système de batterie selon la revendication 4, dans lequel le dispositif d'interruption de courant (30) comprend un élément de rainurage (31, 221) et un élément de basculement (32, 222), l'élément de rainurage (31, 221) étant connecté électriquement à la borne d'électrode interne (24, 213), et l'élément de basculement (32, 222) étant connecté électriquement à l'élément de rainurage (31, 221) et à la borne d'électrode externe (214) respectivement et étant en communication gazeuse avec l'intérieur de la première cellule (20).

6. Système de batterie selon la revendication 5, dans lequel l'élément de rainure (31, 221) comprend une région de rainure (312) dans laquelle une rainure (311) est formée, une première région de soudure (313) destinée à être connectée électriquement à l'élément de basculement (32, 222), et une deuxième zone de soudure (314) destinée à être connectée électriquement à la borne d'électrode interne (24, 213), et l'élément de basculement (32, 222) peut agir sous l'effet de la pression atmosphérique pour rompre l'entaillage (311), l'entaillage (311) étant disposé autour de la première zone de soudage (313), et au moins l'une parmi la première zone de soudage (313) et la deuxième zone de soudage (314) étant disposée dans un plan différent du plan dans lequel l'entaillage (311) est disposé.

7. Système de batterie selon la revendication 6, dans lequel l'entaill , est disposée dans un plan différent des plans dans lesquels sont disposées la première région de soudure (313) et la deuxième région de soudure (314).

8. Système de batterie selon la revendication 7, dans lequel un bossage (315) faisant saillie à partir de la zone d'entaillage (312) est formé sur l'élément d'entaillage (31, 221), la première zone de soudage (313) étant formée sur une surface supérieure du bossage (315) et parallèle à la zone d'entaillage (312), et un joint de soudure annulaire étant disposé à la périphérie extérieure de la surface supérieure.

9. Système de batterie selon la revendication 8, dans lequel une paroi annulaire (316) faisant saillie dans une direction identique à celle dans laquelle fait saillie le bossage (315) est formée à la périphérie extérieure de la zone rainurée (312), le bord supérieur de la paroi annulaire (316) étant aligné avec le bord supérieur du bossage (315) dans le sens de la hauteur, et la paroi extérieure de la paroi annulaire (316) étant destinée à être connectée électriquement à la borne d'électrode interne (24, 213).

10. Système de batterie selon la revendication 8 ou 9, dans lequel la deuxième zone de soudure (314), la zone de rainure (312) et la première zone de soudage (313) sont disposées séquentiellement de l'extérieur vers l'intérieur dans une direction radiale et forment une structure en gradins s'approchant progressivement de l'élément de basculement (32, 222) de l'extérieur vers l'intérieur, et la rainure (311) est disposée autour de la première zone de soudage (313), en particulier dans lequel une paroi annulaire (316) faisant saillie dans une direction opposée à la direction dans laquelle le bossage (315) fait saillie est formée à la périphérie extérieure de la zone d'entaillage (312), la deuxième zone de soudage (314) étant formée à la périphérie extérieure de la paroi annulaire (316) et parallèlement à la zone d'entaillage (312), et un joint de soudure annulaire étant formé à la périphérie extérieure de la deuxième zone de soudure (314), en particulier dans lequel une paroi latérale du bossage (315) et la paroi annulaire (316) sont respectivement perpendiculaires à la zone d'entaillage (312).

11. Système de batterie selon l'une quelconque des revendications 6 à 10, dans lequel la première zone de soudage (313), la zone d'entaillage (312) et la deuxième zone de soudage (314) forment respectivement une structure annulaire.

12. Système de batterie selon l'une quelconque des revendications 5 à 11, dans lequel une première zone de connexion (321) destinée à être connectée électriquement à l'élément rainuré (31, 221) et une deuxième zone de connexion (322) destinée à être connectée électriquement à la borne d'électrode externe (214) sont formées sur l'élément de basculement (32, 222), et une région de coussin de déformation (323) est en outre formée sur l'élément de basculement (32, 222), la région de coussin de déformation (323) étant disposée dans la première région de connexion (321).

13. Système de batterie selon la revendication 12, dans lequel l'élément de basculement (32, 222) est une structure en feuille en forme de cône, une petite extrémité du cône formant la première région de connexion (321) et une grande extrémité du cône éloignée de l'élément de rainurage (31, 221) formant la deuxième région de connexion (322).

14. Système de batterie selon la revendication 12 ou 13, dans lequel la zone de coussin de déformation (323) forme une structure de rainure annulaire entourant la première zone de connexion (321), en particulier dans lequel une section transversale radiale de la structure de rainure annulaire est en forme d'arc ou angulaire.

15. Système de batterie selon l'une quelconque des revendications 5 à 14, dans lequel une bague de support (26) est reliée de manière étanche entre un côté inférieur d'une périphérie extérieure de l'élément de basculement (32, 222) et la plaque de recouvrement (22), et une périphérie extérieure de la borne d'électrode extérieure (214) est reliée de manière électriquement e à un côté supérieur de la périphérie extérieure de l'élément de basculement (32, 222), en particulier dans lequel une bride de support (261) est formée sur une paroi intérieure de la bague de support (26), les périphéries extérieures de l'élément de basculement (32, 222) et de la borne d'électrode extérieure (214) étant supportées sur une surface supérieure de la bride de support (261).

16. Véhicule électrique, comprenant le système de batterie selon l'une quelconque des revendications 1 à 15.
